(19) Europäisches Patentamt
European Patent Office
Office européen des brevets

(11) **EP 4 790 787 A1**

(12) **EUROPEAN PATENT APPLICATION**
published in accordance with Art. 153(4) EPC

(43) Date of publication:
**12.08.2026 Bulletin 2026/33**

(21) Application number: **24938715.0**

(22) Date of filing: **29.11.2024**

(51) International Patent Classification (IPC):
***H01M 10/42*** *(2006.01)* ***H01M 4/38*** *(2006.01)*
***H01M 4/62*** *(2006.01)* ***H01M 4/36*** *(2006.01)*
***H01M 10/052*** *(2010.01)* ***H01M 4/02*** *(2006.01)*

(52) Cooperative Patent Classification (CPC):
**H01M 4/386; H01M 4/134; H01M 4/1395; H01M 4/366;** H01M 4/622; H01M 4/625

(86) International application number:
**PCT/KR2024/019226**

(87) International publication number:
**WO 2026/116543 (04.06.2026 Gazette 2026/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **BestGraphene Co., Ltd**
**Yeoju-si, Gyeonggi-do 12616 (KR)**

(72) Inventors:
- **KIM, Myeong Gi**
  **Yongin-si, Gyeonggi-do 16941 (KR)**
- **LEE, Min Young**
  **Yongin-si, Gyeonggi-do 16816 (KR)**
- **OH, Ji Taek**
  **Yeoju-si, Gyeonggi-do 12653 (KR)**
- **CHOI, Jung Wu**
  **Suwon-si, Gyeonggi-do 16220 (KR)**
- **KANG, Young Soo**
  **Suwon-si, Gyeonggi-do 16485 (KR)**
- **PARK, Jun Nyeong**
  **Suwon-si, Gyeonggi-do 16531 (KR)**

(74) Representative: **Sander, Rolf**
**IPNY AB**
**Birger Jarlsgaten 99A**
**11356 Stockholm (SE)**

(54) **GRAPHENE NETWORK BATTERY**

(57) The present invention relates to a graphene network battery including a positive electrode current collector, a positive electrode mixture, a separator, a negative electrode mixture, and a negative electrode current collector, wherein the negative electrode mixture includes a negative electrode material layer formed on an upper portion of the negative electrode current collector, and including a silicon negative electrode active material and a binder, and a structure-stabilized graphene layer formed on at least one surface of the negative electrode material layer.

FIG.1

24
23
22
21
24
20
10
POSITIVE CURRENT COLLECTOR
NEGATIVE CURRENT COLLECTOR
POSITIVE ELECTRODE ACTIVE MATERIAL LAYER
SEPARATOR
NEGATIVE ELECTRODE ACTIVE MATERIAL LAYER

EP 4 790 787 A1

## Description

### BACKGROUND OF THE INVENTION

The present invention relates to a graphene network battery.

A lithium secondary battery is a device in which intercalation and deintercalation of lithium ions are repeated and which stores and uses energy through charging and discharging processes, and has become an essential power source in various application fields, ranging from portable electronic devices to large-scale devices such as electric vehicles. A lithium secondary battery as described above has properties of being able to be miniaturized and light-weighted, as well as providing a high capacity, a high energy density, safety, and a long lifespan, so that the development of technology for further improved performance is essential.

The performance of a lithium secondary battery depends on components, such as a negative electrode, a positive electrode, a separator, and an electrolyte solution, and among these, the negative electrode plays a key role in determining the capacity of the battery. Currently, a carbon-based material is mainly used as a negative electrode active material, but research on a new high-capacity negative electrode active material has been continuously conducted to achieve performance exceeding a theoretical capacity (372 mAh/g). Particularly, silicon is a material with a theoretical capacity of as large as 4,200 mAh/g, and is attracting attention as a next-generation negative electrode active material to replace current carbon-based negative electrode active materials.

However, a silicon negative electrode active material undergoes a volume change of about 300% or more during charge and discharge processes, and as a result, there is a problem in that the negative electrode active material is pulverized, and is electrically separated from a current collector. The electrical separation sharply decreases the capacity retention rate of a battery, which acts as a major factor that makes the commercialization of the silicon negative electrode active material difficult. In order to address this issue, techniques of coating silicon with a carbon layer, or producing the same in a composite form have been proposed, but they have not yet reached a level suitable for practical commercialization.

Currently, a small amount (less than 5%) of a material, such as a silicon oxide (SiOx) or a silicon-carbon composite (Si/C), is added to a negative electrode plate of a commercially available lithium secondary battery, thereby implementing an energy density of about 300 Wh/kg. However, in order to satisfy a high energy density required for large devices such as electric vehicles, there is a need for the development of new designs and technological developments to improve the capacity and stability of a silicon negative electrode active material. Particularly, innovative approaches are required to address issues such as initial efficiency degradation, volume change, and electrical delamination of a silicon negative electrode active material.

Graphene is attracting attention as a new material to address these issues. Graphene is the thinnest material currently in existence, and is excellent in physical properties such as current density, strength, thermal conductivity, and electron mobility, but has strong self-cohesiveness, which makes it difficult to be dispersed in a polymer or solvent.

### SUMMARY OF THE INVENTION

An objective of the present invention is to provide a graphene network battery capable of effectively controlling a volume change (contraction-expansion) of a silicon negative electrode active material by introducing a structure-stabilized graphene layer on a negative electrode side, and increasing the capacity retention rate of the battery and extending the charge and discharge lifespan thereof by preventing delamination of a silicon negative electrode material layer.

Another objective of the present invention is to reduce energy consumption and greenhouse gas emissions generated during a typical recycling process by applying newly proposed low-temperature heat treatment technology, and to simultaneously achieve economic efficiency and environmental sustainability.

Meanwhile, other objectives of the present invention that are not specified will be further considered within the scope that can be easily derived from the following detailed description and the effects thereof.

In order to achieve the objectives proposed above, the following solution means are proposed.

A graphene network battery according to an embodiment of the present invention includes a positive electrode current collector, a positive electrode mixture, a separator, a negative electrode mixture, and a negative electrode current collector, wherein the negative electrode mixture includes a negative electrode material layer formed on an upper portion of the negative electrode current collector, and including a silicon negative electrode active material and a binder, and a structure-stabilized graphene layer formed on at least one surface of the negative electrode material layer.

In an embodiment, the structure-stabilized graphene layer may be characterized by being formed on the uppermost portion of the negative electrode material layer.

In an embodiment, the structure-stabilized graphene layer may be characterized by having a thickness of 50 nm to 3,000 nm.

In an embodiment, the structure-stabilized graphene layer may be characterized by being interposed between

the negative electrode material layer and the current collector.

In an embodiment, the structure-stabilized graphene layer may be characterized by having a thickness of 10 nm to 500 nm.

In an embodiment, the negative electrode material layer and the structure-stabilized graphene layer may be characterized by being alternately stacked.

In an embodiment, the binder may be characterized by being at least one selected from the group consisting of styrene-butadiene rubber (SBR), carboxymethyl cellulose (CMC), polyacrylic acid (PAA), and a graphene hybrid binder.

In an embodiment, when the binder is a graphene hybrid binder, the graphene hybrid binder may be characterized by including functionalized graphene having a functional group, and a polymer binder bonded to the functionalized graphene by a functional group.

In an embodiment, the silicon negative electrode material may be characterized by being at least one selected from the group consisting of silicon, a silicon compound, and a graphene-silicon hybrid negative electrode active material.

In an embodiment, when the silicon negative electrode material is a graphene-silicon hybrid negative electrode active material, the graphene-silicon hybrid negative electrode active material may be characterized by including a graphene coating layer formed by self-adsorption of functionalized graphene having a functional group onto the surface of silicon or a silicon compound.

## ADVANTAGEOUS EFFECTS

A graphene network battery according to an embodiment of the present invention has a three-dimensional structure in which a structure-stabilized graphene layer and a silicon negative electrode layer are stacked on each other, wherein the structure-stabilized graphene layer effectively controls a volume change (contraction-expansion) of a silicon negative electrode active material, and prevents delamination of the silicon negative electrode material layer due to the volume change of the silicon negative electrode material, thereby increasing the capacity retention rate of the battery and extending the charge and discharge lifespan thereof.

In addition, a graphene network battery according to an embodiment of the present invention includes a silicon negative electrode material layer including at least one of a silicon-graphene hybrid negative electrode active material to which functionalized graphene is self-adsorbed or a binder to which functionalized graphene is bonded by a functional group, thereby forming a three-dimensional graphene network between a structure-stabilized graphene layer and the silicon negative electrode material layer, and accordingly, more effectively controlling a volume change (contraction-expansion) of a silicon negative electrode active material.

Meanwhile, although not explicitly stated herein, it should be understood that effects described in the following specification that are expected by the technical features of the present invention and their provisional effects are treated as described in the specification of the present invention.

## BRIEF DESCRIPTION OF THE DRAWINGS

FIG. 1 is a schematic view of a graphene network battery according to an embodiment of the present invention.

FIG. 2 is a view for describing the self-adsorption of functionalized graphene of a graphene-silicon hybrid negative electrode active material.

FIG. 3 is a view for describing a functional group formed on functionalized graphene of the present invention.

FIG. 4 is a view for showing a structure of a graphene hybrid binder.

FIG. 6 shows the result of FT-IR spectrum analysis of a graphene hybrid binder.

FIG. 7 shows the result of Raman spectrum analysis of a graphene hybrid binder.

FIG. 8 is a view for describing a structure in which a negative electrode material layer and a structure-stabilized graphene layer are alternately formed in multiple layers.

FIG. 9 is a flowchart of a method for manufacturing a graphene network battery.

FIG. 10 is a view for describing a process of forming a structure-stabilized graphene layer through an electrophoretic deposition process.

FIG. 11 shows scanning electron microscope (SEM) images of a current collector layer, a structure-stabilized graphene layer (Bottom), a Si/G negative electrode material layer, and a structure-stabilized graphene layer (Cover).

The accompanying drawings are exemplified by reference for an understanding of the technical idea of the present invention, and the scope of the present invention is not limited thereto.

## DETAILED DESCRIPTION OF PREFERRED EMBODIMENTS

Hereinafter, with reference to the drawings, the configuration of the present invention guided by various embodiments of the present invention, and effects resulting from the configuration will be described. In describing the present invention, detailed descriptions of related known functions will be omitted when it is determined that the detailed descriptions may unnecessarily obscure the gist of the present invention that is apparent to those skilled in the art.

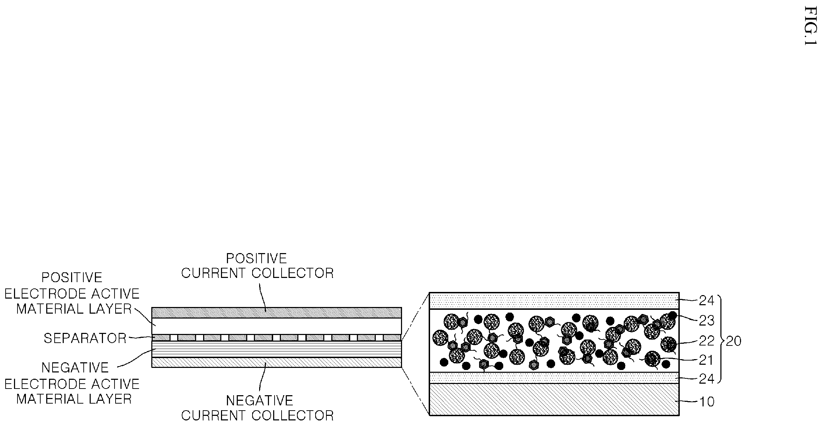

FIG. 1 is a schematic view of a graphene network battery according to an embodiment of the present invention.

As shown in FIG. 1, a graphene network battery according to an embodiment of the present invention includes a positive electrode current collector, a positive electrode mixture, a separator, a negative electrode mixture, and a negative electrode current collector.

The graphene network battery according to an embodiment of the present invention is characterized by a negative electrode.

A negative electrode mixture 20 is formed on one surface of a negative electrode current collector 10. The negative electrode mixture 20 includes a negative electrode material layer including a silicon negative electrode active material 21, a binder 22, and a conductive material 23, and a structure-stabilized graphene layer 24 formed on at least one surface of the negative electrode material layer.

Hereinafter, each component will be described in more detail.

Silicon negative electrode active material

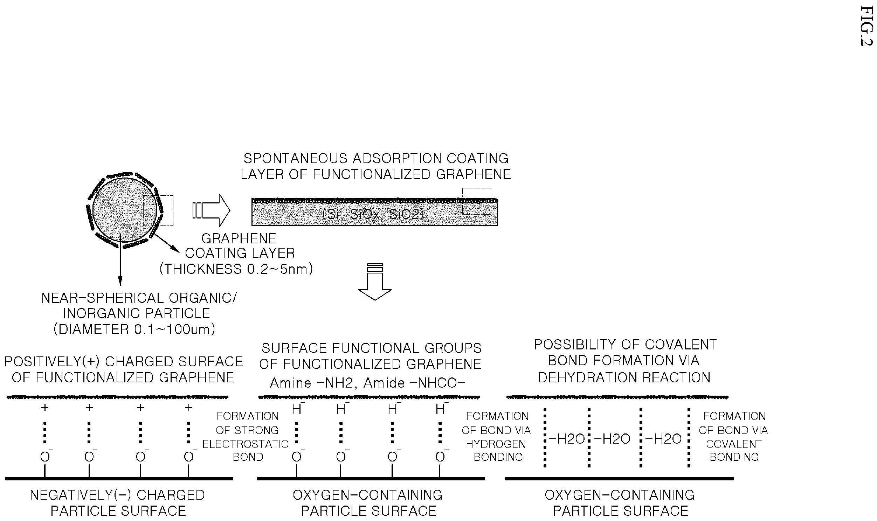

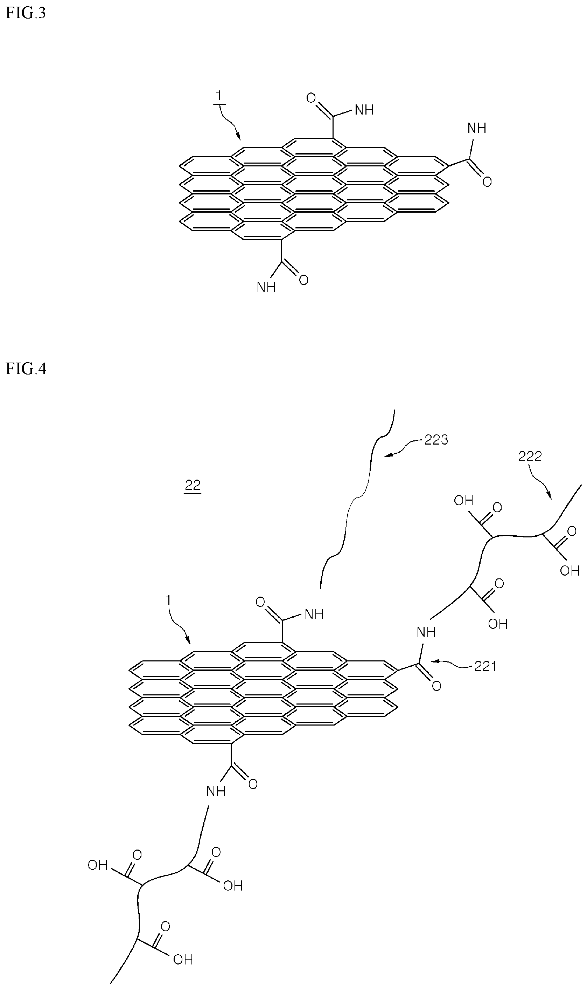

As a silicon negative electrode active material 2, at least one selected from the group consisting of silicon, a silicon compound, and a graphene-silicon hybrid negative electrode active material may be used. The silicon compound may be at least one of a silicon oxide, a silicon nitride, and a silicon carbon composite. The graphene-silicon hybrid negative electrode active material is a material in which functionalized graphene is self-adsorbed onto silicon or a silicon compound by a functional group of the functionalized graphene as shown in FIG. 2. As shown in FIG. 3, functionalized graphene 1 of the present invention is a material in which a functional group is formed on graphene, and the functional group may vary depending on an object to which the functionalized graphene is applied.

The reason that the functionalized graphene of the present invention is self-adsorbed onto silicon or a silicon compound is because the functionalized graphene has an interaction with the silicon or the silicon compound, such as electrostatic bonding, hydrogen bonding, and/or covalent bonding. For example, the functionalized graphene has a (+) charge, and thus, is electrostatically bonded to the surface of silicon or a silicon compound, which has a (-) charge. In this case, the surface of silicon or a silicon compound may have a (-) charge, or may be subjected to surface treatment or pH control of a sol-gel system to have a (-) charge. Particularly, a silicon oxide has a (-) charge due to an oxygen group on the surface thereof.

The functional group of the functionalized graphene used in the graphene-silicon hybrid negative electrode active material may be an amine group ($-NH_2$) or an amide group (-NHCO-). The functionalized graphene has a zeta potential of 40 mV or greater, preferably 50 mV or greater. As described above, if the zeta potential is 40 mV or greater, preferably 50 mV or greater, the functionalized graphene has high dispersibility with respect to a solvent used in a process of preparing the graphene-silicon hybrid negative electrode active material, and is self-adsorbed onto the surface of silicon or a silicon compound by electrostatic bonding. In the case of the silicon oxide, in addition to the electrostatic bonding, the functionalized graphene may further strongly self-adsorbed thereonto by forming a hydrogen bond with hydrogen ($H^+$) of the amine group ($-NH_2$) or amide group (-NHCO-), which is the functional group of the functionalized graphene of the present invention, and with oxygen ($O^-$) on the surface of the silicon oxide, and furthermore, by forming a covalent bond by a dehydration reaction.

However, in order for the functionalized graphene of the present invention to be self-adsorbed onto silicon or a silicon compound, it is necessary to control the amount of a functional group bonded to graphene. In general, graphene oxide is known to have an interplanar distance of about 0.85 nm to about 1.25 nm depending on the degree of oxidation, but the functionalized graphene of the present invention has an interplanar distance of about 3.558 Å (XRD 2 $\theta$ degree 25°) to about 4.790 Å (18.5°). If the interplanar distance is less than about 3.558 Å, it means that there is a lack or absence of a functional group capable of physicochemical bonding to achieve hybridization, and if the interplanar distance is greater than about 4.790 Å, there is a problem in that physical properties of graphene are degraded.

The content of the functionalized graphene in the graphene-silicon hybrid negative electrode active material may be 0.02 wt% to 5 wt% with respect to the silicon or silicon compound. If the content of the functionalized graphene is less than 0.02 wt% with respect to the silicon or silicon compound, a functionalized graphene network is insufficient and a thickness is not sufficiently formed, which causes a problem of low initial efficiency and capacity retention rate of the graphene-silicon hybrid negative electrode active material, and if the content of the functionalized graphene is greater than 5 wt% with respect to the silicon or silicon compound, an excessively formed graphene network and a graphene coating layer thicker than necessary block the path of lithium ions, which causes a decrease in charge capacity. Therefore, the

content of the functionalized graphene in the graphene-silicon hybrid negative electrode active material is preferably 0.02 wt% to 5 wt% with respect to the silicon or silicon compound, and in this case, the thickness of the coating layer is 1 nm to 5 nm by the functionalized graphene.

Meanwhile, the preparation of the graphene-silicon hybrid negative electrode active material is performed by mixing functionalized graphene colloid and silicon or a silicon compound dispersion solution.

The functionalized graphene colloid is prepared by the following method. A graphene oxide aqueous solution is prepared. The preparation of the graphene oxide aqueous solution may be performed by proceeding with an exfoliation process using graphite oxide produced by Hummers and Improved Method or using commercially available graphite oxide. Next, a functional group is imparted to the graphene oxide. An additive for forming a functional group is added to the graphene oxide aqueous solution, stirred, and then ultrasonically dispersed to impart a functional group to the graphene oxide so as to form functionalized graphene. Specifically, about 50 parts by weight to about 150 parts by weight of an additive is added to about 100 parts by weight of the graphene oxide aqueous solution and stirred at about 90 °C to about 120 °C for about 12 hours to about 36 hours to form functionalized graphene. A functional group to be imparted to graphene may be determined by an additive.

As an additive for forming an amine group or amide group, an organic single molecule or polymer capable of forming an amine group or amide group may be used, and for example, any one selected from the group consisting of ethylenediamine, triethylamine, paraphenylenediamine, orthophenylenediamine, mesophenylenediamine, 3,3',4,4'-tetraaminobiphenyl, 3,3',4,4'-tetraaminoterphenyl, benzidine, 1,5-diaminonaphthalene, (E)-4,4'-(diazene-1,2-diyl)dianiline, ethylenediamine, 1,6-diaminohexane,1,8-diaminooactne, 4,4-oxidianiline may be used.

As a solvent for the prepared functionalized graphene colloid, deionized water and ethanol may be mixed and used, and for example, 70 vol% to 90 vol% of deionized water and 10 vol% to 30 vol% of ethanol may be mixed and used. The content of the functionalized graphene included therein may be 1 wt% to 3 wt%.

Since the functionalized graphene of the present invention has a property of being self-adsorbed onto the surface of silicon or a silicon compound, a graphene-silicon hybrid negative electrode active material is prepared simply by mixing the silicon or silicon compound dispersion solution and the prepared functionalized graphene colloid. Particularly, this step is characterized by not using a dispersion aid, or a bonding aid capable of helping silicon or a silicon compound be bonded to each other. Next, a co-precipitate according to the formation of a graphene-silicon hybrid negative electrode active material dispersion solution is centrifuged and filtered, and a separated graphene-silicon hybrid negative electrode active material is washed with ethanol, and separated and dried. Next, the graphene-silicon hybrid negative electrode active material may be finally prepared by performing heat-treatment at 150 °C to 600 °C in a nitrogen atmosphere.

Table 1 below shows results of specifying properties of the graphene-silicon hybrid negative electrode active material according to the heat-treatment temperature.

[Table 1]

| G content (wt.%) with respect to Si | Final heat-treatment temperature (°C, $N_2$) | Graphene bonding force evaluation | Powder resistivity (Ω•m) | Si Crystal Size (nm) | SiC, SiN detection (XRD) |
|---|---|---|---|---|---|
| 0 | - | - | $10^{12}$ or greater | 3.5 | Not detected |
| 3 | 80 | Partial delamination | $8.5 \times 10^4$ | 3.5 | Not detected |
| 3 | 150 | No delamination | $9.7 \times 10^2$ | 3.5 | Not detected |
| 3 | 300 | No delamination | $7.2 \times 10^1$ | 3.6 | Not detected |
| 3 | 600 | No delamination | $4.5 \times 10^0$ | 3.7 | Not detected |
| 3 | 700 | No delamination | $1.3 \times 10^0$ | 10.2 | Detected |
| 3 | 900 | No delamination | $6.3 \times 10^{-2}$ | 25.6 | Detected |

Referring to Table 1, when the heat-treatment temperature of the graphene-silicon hybrid negative electrode active material is 80 °C or lower, there is a problem in that the functionalized graphene is not fully adhered, resulting in partially insufficient bonding. When the heat-treatment temperature of the graphene-silicon hybrid negative electrode active material is 150 °C or higher, electrical conductivity increases as the functional group is reduced, but if the heat-treatment temperature is 700 °C or higher, there is a problem in that the size of silicon crystals increases and by-products such as SiC and SiN are generated. Therefore, the heat-treatment temperature of the graphene-silicon hybrid negative electrode active material should be higher than 80 °C and lower than 700 °C, preferably about 150 °C to 600 °C.

Binder

The binder 22 may be at least one selected from the group consisting of styrene-butadiene rubber (SBR), carboxymethyl cellulose (CMC), polyacrylic acid (PAA), and a graphene hybrid binder.
In the case of the graphene hybrid binder, as shown in FIG. 4, the functionalized graphene 1 and polymer binders 222 and 223 are bonded by a functional group 221 of the functionalized graphene 1. The functionalized graphene 1 bonded to the polymer binder has at least one functional group. For example, a functional group formed on the functionalized graphene bonded to the polymer binder may be at least one selected from the group consisting of a silane group, an amide group, an azide group, an anhydride, a urea group, a urethane group, an amine group, an alkylene group, an epoxide group, and a mercapto group.
The polymer binder used in the graphene hybrid binder may be at least one selected from the group consisting of poly acrylic acid (PAA), poly imide (PI), poly ether imide (PEI), poly urethane/poly urea (PU), styrene-butadiene rubber (SBR), and carboxymethyl cellulose (CMC).
Table 2 below summarizes the types of polymer binders which can be bonded according to a functional group of functionalized graphene.

[Table 2]

| Number | Functional group | Polymer binder |
|---|---|---|
| 1 | Silane | PAA, PI, PEI, PU |
| 2 | Amide, Amine | PAA, PI, PEI, PU |
| 3 | Anhydride, Azide | PAA, SBR, CMC |
| 4 | Urea, Urethane | PAA, PEI, PEI |
| 5 | Alkylene | PAA, PEI, SBR, CMC |
| 6 | Epoxide, Mercapto | PAA, PEI, SBR, CMC |

Meanwhile, in order to prevent a silicon negative electrode active material from being delaminated from a current collector due to expansion and contraction during a charge and discharge process, adhesion as well as elasticity of a polymer binder should be high. To this end, the graphene hybrid binder used in the present invention may include a first polymer binder 222 provided to improve adhesion as well as a second polymer binder 223 provided to improve elasticity. For example, polyacrylic acid may be included as the first polymer binder, and urethane or styrene-butadiene rubber may be included as the second polymer binder.
For reference, the graphene coating layer formed by the functionalized graphene in the graphene-silicon hybrid negative electrode active material has a different role and a different position from the functionalized graphene of the graphene hybrid binder.
A method for preparing functionalized graphene colloid is the same as the method introduced in the description of the graphene-silicon hybrid negative electrode active material. However, a functional group of the functionalized graphene used in the graphene hybrid binder may be different.
As an additive for forming a silane group, an organic silane compound capable of forming a silane group may be used, and for example, any one selected from the group consisting of triethoxysilane, tetraethoxysilane, aminopropyltriethoxysilane, methyltriethoxysilane, vinyltriethoxysilane, phenyltriethoxysilane, octadecyltrimethoxysilane, (3-methacryloxy)propyltrimethoxysilane, 3-Glycidoxypropyl Methyldimethoxysilane, 3-Glycidoxypropyl Trimethoxysilane, 3-Glycidoxypropyl methyldiethoxysilane, 3-Glycidoxypropyl triethoxysilane, Any one selected from the group consisting of 3-Isocyanatepropyltriethoxysilane, and 3-(Trimethoxysilyl)propylsuccinic anhydride may be used. As the additive, an organic single molecule or polymer capable of forming an amine group or amide group may be used, and for example, any one selected from the group consisting of ethylenediamine, triethylamine, paraphenylenediamine, orthophenylenediamine, mesophenylenediamine, 3,3',4,4'-tetraaminobiphenyl, 3,3',4,4'-tetraaminoterphenyl, benzidine, 1,5-diaminonaphthalene, (E)-4,4'-(diazene-1,2-diyl)dianiline, ethylenediamine, 1,6-diaminohexane,1,8-diaminooactne, 4,4-oxidianiline may be used.
As an additive for forming an amine group or amide group, an organic single molecule or polymer capable of forming an amine group or amide group may be used, and for example, any one selected from the group consisting of ethylenediamine, triethylamine, paraphenylenediamine, orthophenylenediamine, mesophenylenediamine, 3,3',4,4'-tetraaminobiphenyl, 3,3',4,4'-tetraaminoterphenyl, benzidine, 1,5-diaminonaphthalene, (E)-4,4'-(diazene-1,2-diyl)dianiline, ethylenediamine, 1,6-diaminohexane,1,8-diaminooactne, 4,4-oxidianiline may be used.
As an additive for forming an anhydride functional group, an organic single molecule or polymer capable of

forming an anhydride functional group may be used, and for example, any one selected from the group consisting of maleic anhydride, tetrahydrophthalic anhydride, hexahydrophthalic anhydride, pyromellitic anhydride, naphthalic anhydride, and trimellitic anhydride may be used.

As an additive capable of forming an azide group, an organic single molecule or polymer may be used, and for example, any one selected from the group consisting of sodium azide, methyl azidoacetate, phenyl azide, 2-azidoethanol, azidoacetic acid, and 2-azidoethylamine may be used.

As an additive capable of forming a urea group or urethane group, an organic single molecule or polymer may be used, and for example, any one selected from the group consisting of isocyanate, polyol, ethoxysilane, polyethylene glycol, toluene diisocyanate, methylene diphenyl diisocyanate, polytetramethylene ether glycol, and poly-caprolactone may be used.

Any one selected from the group consisting of ethylene glycol, propylene glycol, butylene glycol, diethylene glycol, polyethylene glycol, polypropylene glycol, polybutylene glycol, 1,4-butanediol, 1,3-butanediol,1,6-hexanediol), and 1,8-octanediol may be used.

As an additive capable of forming an epoxide group, an epoxidized organic single molecule or polymer may be used, and for example, any one selected from the group consisting of epoxidized alkylene oxide, glycidyl methacrylate, styrenized epoxide, glycidyl amine, bisphenol A epoxy, epoxidized novolac, and epoxidized polyethylene oxide may be used.

As an additive capable of forming a mercapto group, an organic single molecule or polymer may be used, and for example, any one selected from the group consisting of 2-mercaptoethanol, 1-thioglycerol, 3-mercaptopropanesulfonic acid, D-pentaerythritol tetra(3-mercaptopropionate), 4-mercaptophenol, Methyl 3-mercaptopropionate, 6-thioguanine, 1-hexanethiol, ethanethiol, and benzylmercaptan may be used.

For reference, the amount of a functional group to be introduced into the functionalized graphene may be determined by adjusting the amount of additive, stirring temperature, and stirring time.

The functionalized graphene used in the graphene hybrid binder has an absolute value of zeta potential of 40 mV or greater, preferably 50 mV or greater. If the zeta potential is 40 mV or greater, preferably 50 mV or greater, the functionalized graphene has high dispersibility for a solvent used in the process of preparing the functionalized graphene colloid.

A polymer binder monomer is added to the functionalized graphene colloid prepared to produce the graphene hybrid binder. The adding of a polymer binder monomer to the functionalized graphene colloid is performed in two divided steps. First, the functionalized graphene colloid is diluted. That is, the functionalized graphene colloid is diluted 15 times to 25 times in deionized water and then stirred. Then, less than 50 wt% of the total mass of a polymer binder monomer to be added is primarily introduced and reacted at 35 °C to 45 °C for 30 minutes to 90 minutes. Next, the remaining polymer binder monomer is secondarily introduced. If the polymer binder monomer is not divided and added as described above, the functionalized graphene and the polymer binder monomer are not mixed well. After the secondary introduction of the polymer binder monomer, polymerizing of the polymer binder monomer onto a functional group of the functionalized graphene is performed. After the secondary introduction of the polymer binder monomer, the temperature is raised to 50 °C to 70 °C, and the polymerization reaction is performed for 8 hours to 12 hours. In this step, the functional group of the functionalized graphene and the polymer binder are molecular-bonded. After the polymerization reaction is completed, an unreacted material is washed and homogenized to prepare a graphene hybrid binder (GHPB).

Meanwhile, unlike the use of a polymer binder monomer in the above-described production method of a graphene hybrid binder, a polymer binder may be directly bonded to the functionalized graphene. A method for directly bonding a polymer binder to the functionalized graphene includes preparing functionalized graphene colloid, adding a polymer binder to the functionalized graphene colloid, polymerizing the polymer binder onto a functional group of the functionalized graphene, and removing an unreacted material after the reaction is completed, followed by solvent replacement and homogenization.

Since the preparation of functionalized graphene colloid is the same as in the above-described production method, a description thereof will be omitted here.

When the functionalized graphene colloid is prepared, adding of a polymer binder to the functionalized graphene colloid is then performed. The adding of a polymer binder to the functionalized graphene colloid is performed in two divided steps. First, the functionalized graphene colloid is diluted. That is, the functionalized graphene colloid is diluted 15 times to 25 times in deionized water and then stirred. Then, only 20 wt% to 40 wt% of the total mass of a polymer binder to be added is primarily introduced, stirred at room temperature for 20 minutes 40 minutes, and then homogenized with ultrasonic waves for 20 minutes to 40 minutes. Next, the remaining polymer binder is secondarily introduced. If the polymer binder is not divided and added as described above, the functionalized graphene and the polymer binder are not mixed well. After the secondary introduction of the polymer binder, bonding the polymer binder to a functional groups of the functionalized graphene is performed. After the secondary introduction of the polymer binder, the temperature is raised to 50 °C to 70 °C, and the polymerization reaction is performed for 8 hours to 12 hours. In this step, the functional group of the functionalized graphene and the polymer binder are molecular-bonded. After the polymerization reaction is completed, an unreacted

material is washed and homogenized to prepare a graphene hybrid binder (GHPB).

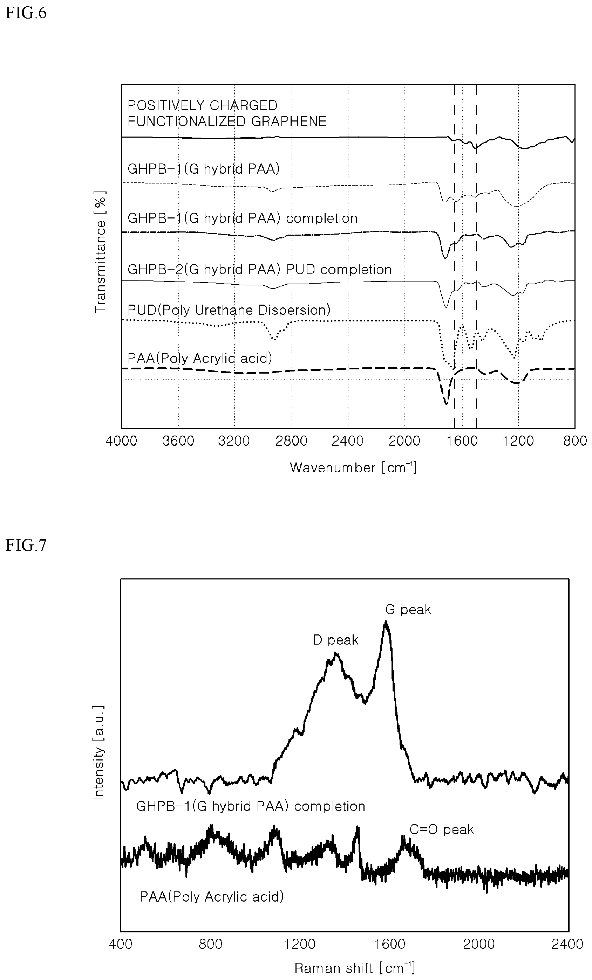

FIG. 6 shows the result of FT-IR spectrum analysis of a graphene hybrid binder used in the present invention.

Graphene colloid was prepared by dispersing 1 wt% of functionalized graphene having a silane group in a solvent in which deionized water and ethanol were mixed at a mass ratio of 8:2, and dispersed and homogenized with ultrasonic waves for 30 minutes or more. Next, 20 wt% of a polymer binder (PAA or PA/PU) based on the total introduction amount was introduced, stirred at room temperature for 30 minutes, and then homogenized with ultrasonic waves for 30 minutes before introducing the remaining polymer binder. After the total amount of the polymer binder was added, the temperature was raised to 60 °C, and then a polymerization reaction was performed for 10 hours. After the reaction was completed, centrifugal separation was performed three times at 2000 rpm for 30 minutes each, followed by washing unreacted materials and performing vacuum filtration, and then a solvent was introduced. Thereafter, homogenization was performed by using an ultrasonic or high-speed homogenizer for 30 minutes to produce a graphene hybrid binder (GHPB), and FT-IR spectrum analysis was performed on the produced graphene hybrid binder.

In FIG. 6, GHPB-1 (G hybrid PAA) is a sample in which the content of the functionalized graphene is 0.01 wt%, the polymer binder is PAA, and the functionalized graphene and the polymer binder are simply mixed. GHPB-1 (G hybrid PAA) completion is a sample in which the content of the functionalized graphene is 0.01 wt%, the polymer binder is PAA, and the functionalized graphene and the polymer binder are bonded to each other by a functional group. GHPB-2 (G hybrid PAA-PUD) completion is a sample in which the content of the functionalized graphene is 0.03 wt%, the polymer binder is PAA and PU, and the functionalized graphene and the polymer binder are bonded to each other by a functional group. Referring to FIG. 6, in a FT-IR spectrum of the sample in which the functionalized graphene and the polymer binder are simply mixed, FT-IR characteristic peaks of the functionalized graphene and characteristic peaks of PAA appear mixed. On the contrary, in FT-IR spectra of GHPB-1 (G hybrid PAA) completion and GHPB-2 (G hybrid PAA-PUD) completion, it can be confirmed that characteristic peaks of the polymer binders (PAA, PU) are clearly observed, whereas characteristic peaks of the functionalized graphene near 1650 $cm^{-1}$ are reduced. This is a result obtained from the bonding of the functionalized graphene and the polymer binder.

In order to more accurately confirm the bonding of functionalized graphene to the polymer binder, Raman spectrum analysis was performed. FIG. 7 shows the result of Raman spectrum analysis of a graphene hybrid binder. Since an unreacted material was removed during the process of preparing the graphene hybrid binder, if the functionalized graphene is not bonded to the graphene hybrid binder, characteristic peaks of the functionalized graphene would not be observed in a result of Raman spectrum analysis. However, as shown in FIG. 7, it can be confirmed that a D peak (1350 $cm^{-1}$) and a G peak (1580 $cm^{-1}$), which were not measured in the Raman spectrum analysis were measured. Therefore, from the combination of the result of FIG. 6 and the result of FIG. 7, it can be seen that the graphene hybrid binder has the functionalized graphene and the polymer binder molecularly bonded to each other through a functional group of the functionalized graphene.

Next, a cross-cut test was performed after coating the GHPB-1 (G hybrid PAA) completion sample and the GHPB-2 (G hybrid PAA-PUD) completion sample on a negative electrode current collector (copper current collector). As a comparative example, a cross-cut test was performed after coating PAA on a negative electrode current collector.

The cross-cut test is a method for evaluating the adhesion of coating. Multiple lines were drawn at regular intervals on the coated surface to form a grid pattern, and then tape was applied and removed to confirm how well the coating was adhered. The state of coating of the removed tape and the grid pattern was observed to classify adhesion into ratings. Test results may be divided into the following ratings. 5B is the highest adhesion rating, indicating that no coating has peeled off from the grid pattern after the test. 4B indicates that less than 5% of the coating has peeled off from the grid pattern. 3B indicates that the loss of coating is in the range of 5% to 15% of the grid pattern. 2B indicates that 15% to 35% of the coating has peeled off from the grid pattern. 1B indicates that 35% to 65% of the coating has peeled off from the grid pattern. 0B is the lowest adhesion rating, indicating that 65% or more of the coating has peeled off.

The cross-cut test result of the PAA binder, which is known to have better point adhesion than SBR and CMC that are widely used as a negative electrode material binder, was 3B. In comparison, the cross-cut test results of both two samples of the graphene hybrid binder were 5B, indicating that the coating did not peel off at all.

Meanwhile, effects according to the content of the functionalized graphene in the graphene hybrid binder are shown in Table 3 below. PAA was used as the polymer binder, and each polymer binder was coated on a copper current collector, and then subjected to a tape test and a cross-cut test. In the tape test, after repeating attaching and detaching tape for 10 times, if the coating did not peel off, it was marked as ◎ (excellent), if the coating peeled off once, ◦ (good), if the coating peeled off 2 times to 3 times, it was marked as △ (average), and in other cases, it was marked as X (poor).

[Table 3]

| Polymer binder | Tape Test | Cross-cut Test |
|---|---|---|
| SBR | X | 0 B or less |
| 70% SBR+ 30% CMC | Δ | 1B |

(continued)

| Polymer binder | Tape Test | Cross-cut Test |
|---|---|---|
| PAA | ○ | 3B |
| GHPB (0.01wt% Graphene/Binder) | ◎ | 5B |
| GHPB (0.03wt% Graphene/Binder) | ◎ | 5B |
| GHPB (0.05wt% Graphene/Binder) | ◎ | 5B |
| GHPB (0.1wt% Graphene/Binder) | ◎ | 5B |
| GHPB (0.3wt% Graphene/Binder) | ◎ | 5B |
| GHPB (0.5wt% Graphene/Binder) | ○ | 4B |
| GHPB (0.6% Graphene/Binder) | Δ | 2B |

As shown in Table 3, it was confirmed that when the content of the functionalized graphene in the graphene hybrid binder of the present invention is 0.01 wt% to 0.5 wt %, an excellent tape test result and a cross-cut test result of 5B were shown, indicating very excellent adhesion. However, if the content of the functionalized graphene is greater than 0.5 wt %, internal cohesion of the functionalized graphene becomes greater than adhesion to an adherend, resulting in a decrease in adhesion. Therefore, the content of the functionalized graphene in the graphene hybrid binder of the present invention may be 0.01 wt% to 0.5 wt %, preferably 0.01 wt% to 0.3 wt %.

In order to analyze the effect of the graphene hybrid binder on the properties of a battery, a negative electrode active material made of a silicon metal (particle size: 7 μm to 10 μm) and a graphene-silicon hybrid negative electrode active material having a functionalized graphene coating layer coated on a silicon metal (particle size: 7 μm to 10 μm) by self-adsorption were prepared. Silicon metal particles having a functionalized graphene coating layer were prepared by spontaneous adsorption of functionalized graphene colloid having a positive charge due to functionalization and silicon particles having a central particle diameter of 7 μm to 10 μm by ultrasonic dispersion treatment in an ethanol solvent for 10 minutes. Next, the particles were subjected to centrifugation or vacuum filtration, and then dried at 80 °C, and heat-treated at 300 °C in a nitrogen atmosphere to be finally prepared. The content of the functionalized graphene included in the silicon metal particles having the functionalized graphene coating layer is 2 wt%. The preparation of silicon metal particles having a functionalized graphene coating layer may be referred to the description disclosed in Korean Patent Laid-Open Publication No. 10-2023-0099837.

In order to evaluate the performance of a secondary battery, a negative electrode was manufactured by using the prepared silicon metal particles or silicon metal particles having a functionalized graphene coating layer as a negative electrode active material.

Comparative Example 1 is composed of 8 um silicon metal particles, artificial graphite (Si:artificial graphite = 1:1), a conductive agent (super p black), and a polymer binder (SBR:CMC=7:3) in a weight ratio of 40:40:10:10.

Example 1 is composed of 8 um silicon metal particles (Si), artificial graphite (Si:artificial graphite = 1:1), a conductive material (super p black), and a graphene hybrid binder (GHPB) in a weight ratio of 40:40:10:10. In this case, as the graphene hybrid binder, SBR and CMC bonded by a functional group was used, and, wherein the content of functionalized graphene in the graphene hybrid binder was 0.05 wt %, and the SBR and the CMC were included in a weight ratio of 7:3.

Comparative Example 2 and Examples 2 to 4 were prepared by increasing the weight of a negative electrode active material (Si : artificial graphite = 1: 1) by the amount of decrease in the graphene hybrid binder.

Example 5 is composed of 8 um graphene-silicon hybrid negative electrode active material (Si/G), artificial graphite (Si/G : artificial graphite = 1:1), a conductive material (super p black), and a graphene hybrid binder (GHPB) in a weight ratio of 40:40:10:10. In this case, as the graphene hybrid binder, SBR and CMC bonded by a functional group may be used, wherein the content of functionalized graphene in the graphene hybrid binder is 0.05 wt %, and the SBR and the CMC are included in a weight ratio of 7:3.

Examples 6 to 9 were prepared by increasing the weight of a graphene-silicon hybrid negative electrode active material (Si : artificial graphite = 1: 1) by the amount of decrease in the graphene hybrid binder.

Comparative Example 3 is the same as Comparative Example 1, except that a graphene-silicon hybrid negative electrode active material (Si/G: artificial graphite = 1:1) was used instead of silicon metal particles.

Meanwhile, the content of the functionalized graphene in the graphene-silicon hybrid negative electrode active material used in Comparative Example 3 and Examples 5 to 9 was 2 wt%.

First, properties of a half-cell were evaluated.

A negative electrode was manufactured as follows. A binder solution was additionally diluted in deionized water, and a negative electrode active material and a conductive material were added thereto, and stirred for 1 hour using a

homomixer to prepare a slurry. The prepared slurry was coated to a thickness of about 75 μm on a copper current collector having a thickness of about 15 μm, dried at about 90 °C for about 2 hours, and then pressed, and dried in a vacuum oven at about 120 °C for about 4 hours to completely remove the solvent, thereby manufacturing an electrode.

A coin half-cell (CR2032) was manufactured by using lithium metal foil as a positive electrode, a polyethylene separator, and an electrolyte solution together with the manufactured negative electrode. In this case, the electrolyte solution was prepared and used by mixing 1.2 M of $LiPF_6$, and a mixed solution of ethylene carbonate (EC), diethyl carbonate (DEC), and fluoroethylene carbonate (FEC) (EC/DEC/FEC = 2/6/2 (volume ratio)) at a weight ratio of 3:7.

Evaluation of properties of a half-cell and a full-cell was performed as follows by applying IEC 62620 standards. At room temperature (25±5 °C), perform constant-current charging at a 0.1 C-rate current to 0.01 V, followed by constant-voltage charging at 0.01 V (cut-off current was 0.01 C-rate), and then perform constant-current discharge at a 0.1 C-rate current to 1.5 V. Calculate discharge capacity and initial charge and discharge efficiency under the above-described conditions. Lifespan evaluation was performed at room temperature (25±5 °C) by constant-current charging at a 0.1 C-rate current to 0.005 V, followed by constant-voltage charging at 0.005 V (cut-off current was 0.005 C-rate), and then constant-current discharge at a 0.1C-rate current to 1.5 V. The charge and discharge were repeated 50 times to evaluate charge and discharge properties.

Meanwhile, for the full-cell, 500 cycles of repeated charge and discharge properties were evaluated to compare lifespan properties.

When manufacturing the full-cell, a negative electrode was manufactured in the same manner as in the half-cell, and a positive electrode was manufactured by adding an NCM622 active material having a central particle diameter of 8 um and a conductive material (super p black) to a PVdF binder solution dissolved in an NMP solvent, and stirred for a 1 hour using a homomixer to prepare a slurry. In this case, the positive electrode material is composed of the NCM622, the conductive material, and the PVdF binder in a weight ratio of 80:10:10.

The prepared positive electrode slurry was coated to a thickness of about 75 μm on an aluminum current collector having a thickness of about 20 μm, dried at about 120 °C for about 2 hours, and then pressed, and dried in a vacuum oven at about 120 °C for about 4 hours to completely remove the solvent, thereby manufacturing a positive electrode.

A full-cell was assembled under the same conditions as in the manufacturing of the half-cell, and the manufactured positive electrode was used instead of lithium metal foil, and 500 cycles of repeated charge and discharge were evaluated to compare lifespan properties.

Hereinafter, properties of the half-cell and the full-cell were evaluated below. The initial efficiency and the lifespan were calculated as follows, respectively.

Initial efficiency (%) = (first-cycle discharge capacity/first-cycle charge capacity) × 100

Lifespan (%) = (n-th cycle discharge capacity/ first-cycle discharge capacity) × 100

Table 4 shows results of evaluating properties of a half-cell containing silicon metal particles as a negative electrode active material (Si : artificial graphite = 1:1).

[Table 4]

| Number | Binder | Binder content (wt%) | Initial discharge capacity (mAh/g) | Capacity retention rate (10 times) (%) | Capacity retention rate (50 times) (%) |
|---|---|---|---|---|---|
| Comparative Example 1 | SBR+CMC | 10 | 1691.4 | 78 | 27.5 |
| Comparative Example 2 | SBR+CMC | 8 | 1733.5 | 62.1 | 23.5 |
| Example 1 | GHPB | 10 | 1698.8 | 87.5 | 75.2 |
| Example 2 | GHPB | 8 | 1742.3 | 87.7 | 75.1 |
| Example 3 | GHPB | 7 | 1763.7 | 87.4 | 75.0 |
| Example 4 | GHPB | 6 | 1781.7 | 82.5 | 60.1 |

In Comparative Example 1, a decrease in capacity gradually appeared from the 10-th cycle of charge and discharge, and by the 50-th cycle, most of the silicon metal particles were destroyed, resulting in exhibiting a significantly low capacity retention rate.

In Comparative Example 2, the initial discharge capacity was higher than that of Comparative Example 1 due to

the reduction of the binder, but the decrease in capacity was greater than that of Comparative Example 1. This is because the volume expansion and contraction during charge and discharge had a stronger effect due to the higher content of silicon metal particles.

It was confirmed that Examples 1 to 4 in which the graphene hybrid binder of the present invention was included as a binder had a significantly higher capacity retention rate at the 10-th cycle of charge and discharge than that of Comparative Examples. Particularly, Examples 1 to 3 exhibited a very high capacity retention rate of about 75% even at the 50-th cycle of charge and discharge. However, Example 4 in which the binder content was significantly reduced exhibited a capacity decrease to 60.1% at the 50-th cycle of charge and discharge. This is because the adhesion decreased due to the reduction in binder content, thereby causing de-lamination in the current collector due to the expansion and contraction behavior of the silicon metal particles during charge and discharge, and furthermore, the increase in SEI layer formation caused irreversible capacity, resulting in capacity loss.

Therefore, if a negative electrode material includes silicon metal particles, the content of the graphene hybrid binder may be 7 wt% to 10 wt% of the total weight of the negative electrode material.

Table 5 shows results of evaluating properties of a half-cell including silicon metal particles, which have functionalized graphene as a coating layer, as a negative electrode active material.

[Table 5]

| Number | Negative electrode active material type | Binder Type | Binder content (wt%) | Initial discharge capacity (mAh/g) | Initial efficiency (%) | Capacity retention (50 times) (%) |
|---|---|---|---|---|---|---|
| Comparative Example 1 | Si : artificial graphite = 1:1 | SBR+CMC | 10 | 1691.4 | 89.2 | 27.5 |
| Comparative Example 2 | Si : artificial graphite = 1:1 | SBR+CMC | 8 | 1733.5 | 89.3 | 23.5 |
| Example 1 | Si : artificial graphite = 1:1 | GHPB | 10 | 1698.8 | 90.2 | 75.2 |
| Example 2 | Si : artificial graphite = 1:1 | GHPB | 8 | 1742.3 | 90.5 | 75.1 |
| Example 3 | Si : artificial graphite = 1:1 | GHPB | 7 | 1763.7 | 90.1 | 75.0 |
| Example 5 | Si/G : artificial graphite = 1:1 | GHPB | 10 | 1672.0 | 92.9 | 96.3 |
| Example 6 | Si/G : artificial graphite = 1:1 | GHPB | 8 | 1725.2 | 93.1 | 96.1 |
| Example 7 | Si/G : artificial graphite = 1:1 | GHPB | 7 | 1736.4 | 93.0 | 96.2 |
| Example 8 | Si/G : artificial graphite = 1:1 | GHPB | 6 | 1757.6 | 92.1 | 96.0 |
| Example 9 | Si/G: artificial graphite = 1:1 | GHPB | 5 | 1779.7 | 87.1 | 89.5 |
| Comparative Example 3 | Si/G : artificial graphite = 1:1 | SBR+CMC | 10 | 1669.3 | 91.1 | 94.3 |

Comparing Examples 1 to 3 with Examples 5 to 7, if silicon metal particles having a functionalized graphene coating layer are included as a negative electrode active material, it can be seen that Examples 5 to 7 have a higher initial efficiency than Examples 1 to 3, and even have a significantly higher capacity retention rate when performing 50 cycles of charge and discharge.

In the case of Examples 5 to 7, since there is a functionalized graphene coating layer self-bonded to the silicon metal particles on the surface of the silicon metal particles, the functionalized graphene coating layer primarily controls expansion and contraction behaviors of the silicon metal particles during charge and discharge, and the graphene hybrid binder secondarily controls, with excellent adhesion and elasticity, the expansion and contraction behaviors of the silicon

metal particles during charge and discharge.

Particularly, when the silicon metal particles having a functionalized graphene coating layer were included as the negative electrode active material, excellent capacity retention was observed even when the content of the graphene hybrid binder was 6 wt% (Example 8).

However, Example 9 in which the binder content was significantly reduced exhibited a capacity decrease to 89.5% at the 50-th cycle of charge and discharge. This is because the adhesion decreased due to the reduction in binder content, thereby causing de-lamination in the current collector due to the expansion and contraction behavior of the silicon metal particles during charge and discharge, and furthermore, the increase in SEI layer formation caused irreversible capacity, resulting in capacity loss.

Meanwhile, in the case of Comparative Example 3, in which a mixture of SBR and SMC, rather than the graphene hybrid binder of the present invention, was used as the binder, the capacity maintenance rate after 50 cycles of charge and discharge was lower than that of Examples 5 to 8, but was good at 94.3%. This is because the functionalized graphene coating layer coating the silicon metal particles efficiently controls the expansion and contraction behaviors of the silicon metal particles during charge and discharge. However, as to be seen later, the capacity retention rate of Comparative Example 3 significantly decreases after 100 cycles of charge and discharge.

Table 6 shows results of evaluating properties of a full-cell including silicon metal particles, which have functionalized graphene as a coating layer, as a negative electrode active material. High-speed charge and discharge properties are represented by discharge capacity under a 2 C condition/discharge capacity under a 0.2 C condition. (C: current rate)

[Table 6]

| Number | Negative electrode active material type | Binder type | Binder content | Capacity retention rate (50 cycles) (%) | Capacity retention rate (100 cycles) (%) | Capacity retention rate (300 cycles) (%) | Capacity retention rate (500 cycles) (%) | High-speed charge/discharge properties (%) |
|---|---|---|---|---|---|---|---|---|
| Comparative Example 4 | Si : Artificial graphite = 1:1 | SBR+CMC | 10 | 26.8 | 10.8 | Stopped | Stopped | 31 |
| Example 10 | Si : Artificial graphite = 1:1 | GHPB | 10 | 75.4 | 65.7 | 63.1 | 57.8 | 53 |
| Example 11 | Si/G: Artificial graphite = 1:1 | GHPB | 10 | 96.2 | 95.1 | 93.1 | 90.5 | 82 |
| Example 12 | Si/G: Artificial graphite = 1:1 | GHPB | 8 | 96.3 | 95.2 | 92.9 | 90.6 | 83 |
| Example 13 | Si/G: Artificial graphite = 1:1 | GHPB | 7 | 96.2 | 95.2 | 93.2 | 90.4 | 84 |
| Example 14 | Si/G: Artificial graphite = 1:1 | GHPB | 6 | 95.8 | 94.1 | 92.7 | 90.1 | 84 |
| Example 15 | Si/G: Artificial graphite = 1:1 | GHPB | 5 | 87.6 | 85.1 | 80.1 | 71.2 | 81 |
| Comparative Examples 3 | Si/G: Artificial graphite = 1:1 | SBR+CMC | 10 | 93.1 32 | 52.1 | 35.6 | Stopped | 72 |

During the full-cell evaluation, Comparative Example 4 exhibited rapid performance degradation due to silicone contraction and expansion.

By the introduction of GHPB, Example 10 exhibited improved high-speed charge and discharge properties due to an increase in lifespan and an increase in electrical connection, but exhibited a capacity retention rate of 70% or lower at the 100-th cycle of charge and discharge.

In the case of Examples 11 to 14 in which silicon metal particles having a functionalized graphene coating layer are included as a negative electrode active material and a graphene hybrid binder is used as a binder, it can be seen that the capacity retention rate was 80% or higher even after 500 cycles of charge and discharge. In addition, due to the interaction between the functionalized graphene coating layer coating the silicon metal particles and the functionalized graphene included in the graphene hybrid binder, the high-speed charge and discharge properties were also very excellent at 80% more and the higher.

That is, the lifespan was improved due to the effect of controlling contraction-expansion of the silicon metal particles having a functionalized graphene coating layer and the enhancement of binding force with a current collector by the graphene hybrid binder, and the high-speed charge and discharge properties significantly improved due to the formation of a network by graphene between the silicon metal particles having a functionalized graphene coating layer - the graphene hybrid binder - the current collector.

In conclusion, if the silicon metal particles having a functionalized graphene coating layer are included as the negative electrode active material, the content of the graphene hybrid binder may be 5 wt% to 10 wt %, preferably 6 wt% to 10 wt %, based on the total weight of the negative electrode material.

Conductive material

As the conductive additive 23, at least one selected from the group consisting of carbon black and carbon nanotubes may be used.

Structure-stabilized graphene layer

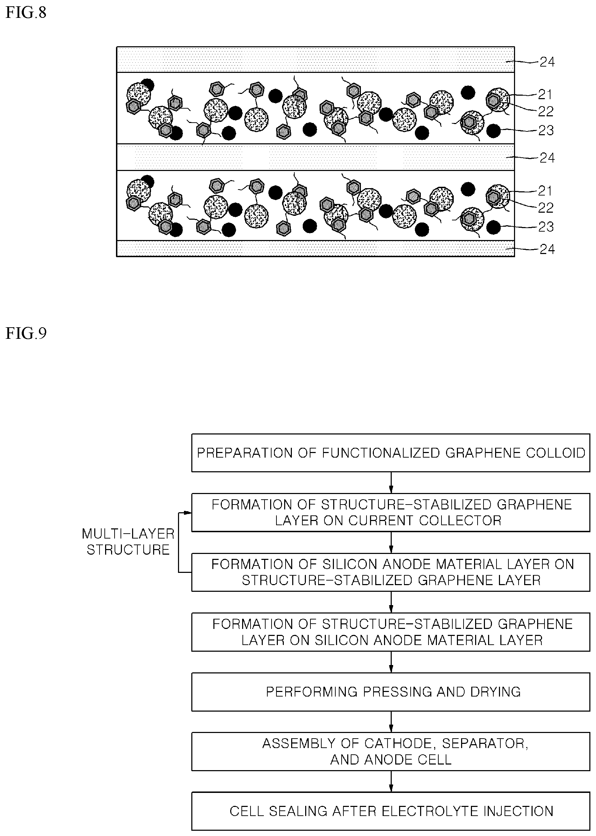

As shown in FIG. 1, the structure-stabilized graphene layer 24 is characterized in that at least one layer is inserted into the negative electrode mixture. For example, the structure-stabilized graphene layer 24 may be formed to cover the uppermost surface of the negative electrode material layer, or may be interposed between the negative electrode material layer and the current collector 10. It is also possible for the negative electrode material layer to be interposed between the structure-stabilized graphene layers 24. Alternatively, as shown in FIG. 8, the negative electrode material layer and the structure-stabilized graphene layer 24 may be alternately formed in multiple layers. That is, it is also possible for the structure-stabilized graphene layer 24 to be disposed in the middle of the negative electrode material layer.

FIG. 9 is a schematic flowchart of a method for manufacturing a graphene network battery according to an embodiment of the present invention, which includes a process of forming a structure-stabilized graphene layer.

First, functionalized graphene colloid is prepared. The functionalized graphene colloid may be prepared by the method for preparing functionalized graphene described in the above-described silicon negative electrode active material or binder, and the zeta potential may have a positive charge of +40 mV or greater, preferably +50 mV or greater.

Next, a structure-stabilized graphene layer is formed on a current collector. However, it is also possible to form a negative electrode material layer on a current collector, and then form a structure-stabilized graphene layer thereon. Alternatively, it is also possible to form a structure-stabilized graphene layer on a current collector, followed by forming a negative electrode material layer thereon, and then form the structure-stabilized graphene layer again thereon. Furthermore, it is also possible to form multiple layers by repeating forming a negative electrode material layer and a structure-stabilized graphene layer.

When forming a structure-stabilized graphene layer on a current collector, casting may be used, or electrophoretic deposition (EPD) may be used. The thickness of the structure-stabilized graphene layer formed on the current collector may be 10 nm to 500 nm. The structure-stabilized graphene layer formed on the current collector is formed thin and uniform in order to secure electrical connectivity with the current collector, and form a graphene network.

When forming a structure-stabilized graphene layer on a negative electrode material layer, electrophoretic deposition (EPD) may be used. The thickness of the structure-stabilized graphene layer formed on the current collector may be 50 nm to 3,000 nm. The structure-stabilized graphene layer formed on the current collector is to control contraction-expansion of a silicon negative electrode active material, and form a graphene network.

The structure-stabilized graphene layer formed through casting or electrophoretic deposition may be dried.

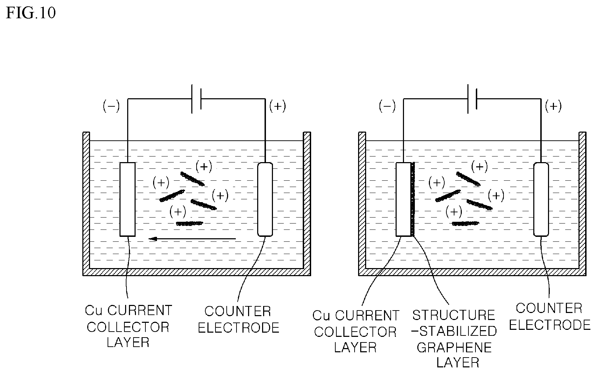

FIG. 10 is a view for describing a process of forming a structure-stabilized graphene layer through electrophoretic deposition.

As shown in FIG. 10, a negative electrode current collector (a negative electrode current collector with a negative electrode material layer is formed) is connected to the (-) terminal, and a counter electrode (e.g., SUS) is connected to the

(+) terminal. The negative current collector (the negative current collector with the negative electrode material layer) and the counter electrode are immersed in diluted graphene colloid, and applied with a voltage. The functionalized graphene of the present invention has a positive charge of +40 mV or greater, and thus moves to the negative electrode current collector (the negative electrode current collector with the negative electrode material layer) connected to the (-) terminal and is electro-deposited. Thereafter, a structure-stabilized graphene layer is formed by performing drying.

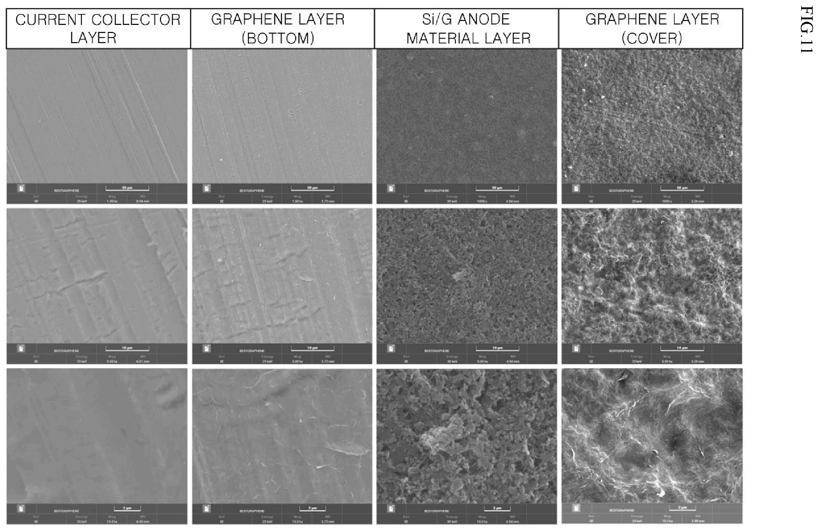

FIG. 11 shows scanning electron microscope (SEM) images of a current collector layer, a structure-stabilized graphene layer (Bottom), a Si/G negative electrode material layer, and a structure-stabilized graphene layer (Cover).

The structure-stabilized graphene layer (Bottom) was formed by electrophoretic deposition of functionalized graphene having a concentration of 0.05 wt.% at 20 V for 30s, and the structure-stabilized graphene layer (Cover) was formed by electrophoretic deposition of functionalized graphene having a concentration of 0.05 wt.% at 25 V for 60s.

First, when comparing the current collector layer and the structure-stabilized graphene layer (Bottom), it can be seen that a unique crumpled and folded shape and edges of a graphene sheet are visible.

Next, when comparing the structure-stabilized graphene layer (Bottom) and the Si/G negative electrode material layer, it can be seen that the structure-stabilized graphene layer (Bottom) is not visible due to the Si/G negative electrode material layer.

Finally, when comparing the Si/G negative electrode material layer and the structure-stabilized graphene layer (Cover), it can be seen that the roughness of the Si/G negative electrode material layer is still visible even after the structure-stabilized graphene layer is formed, the unique crumpled and folded shape and edges of a graphene sheet are also visible.

The negative electrode material layer may be formed by mixing a negative electrode active material, a conductive material, and a binder to prepare a negative electrode slurry, and then casting the slurry onto a current collector or a structure-stabilized graphene layer.

Once the formation of the structure-stabilized graphene layer and the negative electrode material layer on the current collector is completed, pressing and drying are performed, and a cell is assembled. After assembling the cell, an electrolyte is introduced and then the cell is sealed. From the completion of the formation of the structure-stabilized graphene layer and the negative electrode material layer on the current collector to the step of completing the battery, a known method may be used.

Physical properties according to the structure-stabilized graphene layer and the performance of the battery were evaluated.

First, functionalized graphene colloid in which the zeta potential has a positive charge of +40 mV or greater and which has a concentration of 0.5 wt.%, was prepared. Functionalized graphene was dispersed and homogenized with ultrasonic waves for 30 minutes or more in a solvent of 50% ethanol and 50% IPA (isopropyl alcohol).

In some examples or comparative examples, 0.5 wt.% functionalized graphene colloid was coated (wet film thickness 30 μm, rate 30 mm/s) on a copper current collector having a thickness of 17 μm by casting, and then dried at 60 °C for 1 hour to form a structure-stabilized graphene layer on the current collector.

In other examples or comparative examples, a graphene layer was formed on a copper current collector by electrophoretic deposition. The prepared 0.5 wt.% functionalized graphene colloid was diluted 10 times to produce 0.05 wt.% graphene colloid. The negative current collector was connected to the (-) terminal, and a counter electrode (SUS) was connected to the (+) terminal. The negative current collector and the counter electrode were immersed in the diluted graphene colloid, and an electrophoretic deposition process was performed by applying 20 V for 1 minute. Drying was performed at 60 °C for 4 hours to form a structure-stabilized graphene layer on the current collector.

A negative electrode active material, a binder, and a conductive material are mixed at a weight ratio of 80:10:10 to prepare a negative electrode slurry. Depending on the examples or comparative examples, the negative electrode active material may be artificial graphite, a silicon metal (Si), or a graphene-silicon hybrid negative electrode active material (Si/G), the binder may be a SBR-CMC (7:3) mixed binder, a PAA binder, or a graphene hybrid binder (GHPB), and the conductive material may be carbon black or Super p black.

The prepared slurry is applied on a current collector or a structure-stabilized graphene layer formed on the current collector and dried to manufacture a negative electrode of an example or comparative example.

As a positive electrode material, a slurry prepared by mixing a lithium oxide (LCO, NCM, NCMA, NCA, LMO, or LFP), a conductive material, a PVDF binder, and an NMP solvent was applied on a positive electrode current collector to manufacture a positive electrode.

A polyethylene separator was used as a separator.

The manufactured negative electrode, the positive electrode, and the separator were used to manufacture a negative electrode half-cell or full-cell, which was evaluated for performance.

First, adhesion of the negative electrode materials of comparative examples and examples to the current collector was evaluated using a tape test and a cross-cut test, and the results are shown in Table 7 below.

[Table 7]

| Negative electrode material composition (Negative electrode active material-conductive material-binder) | Tape Test | Cross-cut Test |
|---|---|---|
| Artificial graphite-carbon black-SBR, CMC binder | ○ | 3B |
| Silicon metal-carbon black-SBR, CMC binder | X | 1B |
| Silicon metal-carbon black-PAA binder | Δ | 2B |
| Silicon metal-carbon black-GHPB binder | ○ | 3B |
| Si/G-carbon black-GHPB binder | ◎ | 4B |
| Si/G-carbon black-SBR, CMC binder+structure-stabilized graphene layer formed on upper and lower surfaces of negative electrode material layer | ◎ | 5B |
| Si/G-carbon black-GHPB binder+structure-stabilized graphene layer formed on upper and lower surfaces of negative electrode material layer | ◎ | 5B |

The cross-cut test is a method for evaluating the adhesion of coating. Multiple lines were drawn at regular intervals on the coated surface to form a grid pattern, and then tape was applied and removed to confirm how well the coating was adhered. The state of coating of the removed tape and the grid pattern was observed to classify adhesion into ratings. Test results may be divided into the following ratings. 5B is the highest adhesion rating, indicating that no coating has peeled off from the grid pattern after the test. 4B indicates that less than 5% of the coating has peeled off from the grid pattern. 3B indicates that the loss of coating is in the range of 5% to 15% of the grid pattern. 2B indicates that 15% to 35% of the coating has peeled off from the grid pattern. 1B indicates that 35% to 65% of the coating has peeled off from the grid pattern. 0B is the lowest adhesion rating, indicating that 65% or more of the coating has peeled off.

In the tape test, after repeating attaching and detaching tape for 10 times, if the coating did not peel off, it was marked as ◎ (excellent), if the coating peeled off once, ◦ (good), if the coating peeled off 2 times to 3 times, it was marked as △ (average), and in other cases, it was marked as X (poor).

Referring to FIG. 4, when the structure-stabilized graphene layer was introduced into the negative electrode material layer, both the tape test results and the cross-cut test results show excellent results, so that it can be seen that interlayer adhesion was significantly improved due to the introduction of the structure-stabilized graphene layer.

Next, the performance of a graphene network battery was evaluated.

Comparative Examples 5 and 7 used a negative electrode material composed of 0.7 μm silicon particles, a conductive material (Super P Black), and a binder (SBR:CMC = 7:3) in a weight ratio of 80:10:10.

Comparative Examples 6 and 8 and Examples 16 and 41 used a negative electrode material which has the same composition as that of Comparative Examples 5 and 7, and used PAA having a molecular weight of 1,000,000 g/mol as a binder.

Examples 17 to 40, 42, and 43 used a graphene-silicon hybrid negative electrode active material (Si/G) as a negative electrode material, wherein Si/G used had a functionalized graphene content of 2.0 wt% with respect to 0.7 μm silicon particles. Example 17 used a binder in which SBR and CMC were mixed in a ratio of 7:3 as a binder, and the remainder was composed using a graphene hybrid binder (GHPB).

Negative electrode materials of Comparative Examples 5 to 8 and Examples 16 to 43 were prepared by additionally diluting a binder solution in deionized water, adding a negative electrode active material and a conductive material thereto, and stirring the mixture for 1 hour using a homomixer to prepare a negative electrode slurry.

A structure-stabilized graphene layer (Bottom) on a negative electrode current collector was prepared as follows.

In Example 17, 0.5 wt% functionalized graphene colloid was coated (wet film thickness 30 μm, rate 30 mm/s) on a copper current collector having a thickness of 17 μm, and then dried at 60 °C for 1 hour to form the structure-stabilized graphene layer (Bottom) on the current collector.

In Examples 19, 20, 21, 22, and 42, 0.1 wt% functionalized graphene colloid was coated under the same conditions, wherein structure-stabilized graphene layers (Bottom) of 5 nm, 10 nm, 20 nm, and 40 nm were formed by varying the number of times for performing the coating.

In Examples 23 to 40 and 43, 0.05 wt% functionalized graphene colloid was used to perform an electrophoretic deposition process. A copper current collector having a thickness of 17 μm was connected to the (+) terminal, and a counter electrode made of a SUS material was connected to the (-) terminal, and a voltage of 10 V to 30 V was applied for 10 seconds to 5 minutes. Through this, a structure-stabilized graphene layer (Bottom) for each thickness was formed, and dried at 60 °C for 4 hours.

Thereafter, the prepared negative electrode slurry was coated to a thickness of 30 μm on the structure-stabilized graphene layer (Bottom), dried at 90 °C for 2 hours, and then pressed. Drying was performed in a vacuum oven at 120 °C

for 4 hours to form a negative electrode material layer. In Comparative Examples and Examples without the structure-stabilized graphene layer (Bottom), the negative electrode slurry was applied and dried in the same manner on a copper current collector having a thickness 17 μm to complete a negative electrode material layer.

In the case of Examples including a structure-stabilized graphene layer (Cover) on a negative electrode material layer, the negative electrode material layer was formed, and then the structure-stabilized graphene layer (Cover) was formed by performing an electrophoretic deposition process. Drying was performed at 60 °C for 4 hours to finally manufacture a negative electrode.

A coin half-cell (CR2032) was manufactured by using the manufactured electrode as a negative electrode, lithium metal foil as a positive electrode, a polyethylene separator, and an electrolyte solution of EC/DEC/FEC=2/6/2 (v/v) containing 1.2 M $LiPF_6$. Charge and discharge were performed at a current of 0.24 mA (1 C/20) in a voltage range of 0.2 V to 1.5 V, or charge was performed at a constant current of 130 mA/g to 0.001 V, and then charge was performed at a constant voltage to 65 mA/g. Discharge was performed at a constant current of 130 mA/g to 1.5 V, and this process was repeated 100 times to evaluate charge and discharge properties. For the full-cell, 500 cycles of repeated charge and discharge properties were evaluated to compare lifespan properties.

When manufacturing the full-cell, a negative electrode was manufactured in the same manner as in the half-cell, and a positive electrode was manufactured by adding an NCM622 active material having a central particle diameter of 8 um and a conductive material (Super P Black) to a PVdF binder solution dissolved in an NMP solvent, and stirred for 1 hour using a homomixer to prepare a slurry. A positive electrode material was composed of NCM622:conductive material:PVdF binder in a weight ratio of 80:10:10.

The prepared positive electrode slurry was coated to a thickness of 65 μm on an aluminum current collector having a thickness of 20 μm, dried at 120 °C for 2 hours, and then pressed. Drying was performed in a vacuum oven at 120 °C for 4 hours to completely remove the solvent for completion.

A full-cell was assembled under the same conditions as in the case of the half-cell, except that the manufactured positive electrode was used instead of lithium metal foil. 500 cycles of repeated charge and discharge were evaluated to compare lifespan properties, and lifespan (%) was calculated by (n-th cycle discharge capacity / first-cycle discharge capacity X 100. High-speed charge and discharge evaluation was expressed as a value obtained by dividing a discharge capacity under a 2 C condition by a discharge capacity under a 0.2 C condition.

Table 8 below shows results of evaluating properties of half-cells of Examples and Comparative Examples.

[Table 8]

| Number | Graphene layer (Bottom) | Negative electrode material layer | Graphene layer (Cover) | Initial discharge capacity (mAh/g) | Capacity retention rate (10 cycles) (%) | Capacity retention rate (50 cycles) (%) |
|---|---|---|---|---|---|---|
| Comparative Example 5 | None | Silicon metal-carbon black-SBR, CMC binder | None | 1605 | 21.5 | 5.5 |
| Comparative Example 6 | None | Silicon metal-carbon black-PAA binder | None | 3250 | 35.1 | 8.7 |
| Example 16 | None | Silicon metal-carbon black-PAA binder | EPD (25V, 60s) | 3325 | 95 | 75.4 |
| Example 17 | Casting | Si/G-carbon black-SBR, CMC binder | EPD (25V, 60s) | 3356 | 98.5 | 97.8 |
| Example 18 | EPD (20V, 30s) | Si/G-carbon black-GHPB binder | EPD (25V, 60s) | 3352 | 98.7 | 98.1 |

Comparative Example 6 and Examples 16 to 17 have an initial discharge capacity about twice that of Examples 1 to 15, and this is because artificial graphite was not mixed as a negative electrode active material.

Comparative Example 5 has a low initial discharge capacity, and exhibited rapid performance degradation due to expansion and contraction of the silicon negative electrode material from the beginning of charge and discharge in the process of lifespan evaluation.

Comparative Example 6 exhibited a normal initial discharge capacity due to the application of a PAA binder having excellent adhesion, but exhibited rapid performance degradation due to delamination from the current collector caused by expansion and contraction of the silicon negative electrode material from the beginning of charge and discharge in the process of lifespan evaluation.

Example 16 exhibited a normal initial discharge capacity, and exhibited excellent performance up to 10 cycles of charge and discharge in the process of lifespan evaluation, but exhibited performance degradation at the 50-th cycle of charge and discharge. This suggests that the negative electrode active material was partially delaminated from the current collector.

Meanwhile, Examples 17 and 18, in which the structure-stabilized graphene layer was applied to the upper and lower surfaces of the negative electrode material layer, exhibited an excellent initial discharge capacity, and an excellent capacity retention rate at the 50-th cycle of charge and discharge. This indicates that the structure-stabilized graphene layer on the upper and lower surfaces of the negative electrode material layer effectively controls the expansion and contraction of the silicon negative electrode material during charge and discharge.

Table 9 below shows results of evaluating properties of a half-cell for each condition of the structure-stabilized graphene layer (Bottom).

[Table 9]

| Example | Graphene layer (Bottom) | Negative electrode material layer | Graphene layer (cover) | Initial discharge capacity (mAh/g) | Rate properties (2C) (%) | Capacity retention rate (100 cycles) (%) |
|---|---|---|---|---|---|---|
| 19 | Casting (5 nm) | Si/G-carbon black-GHPB binder | EPD (25V, 60s) (150 nm) | 3305 | 80.5 | 81.4 |
| 20 | Casting (10 nm) | | | 3310 | 82.1 | 95.8 |
| 21 | Casting (20 nm) | | | 3318 | 81.9 | 95.7 |
| 22 | Casting (40 nm) | | | 3320 | 81.8 | 95.3 |
| 23 | EPD (50 nm) | | | 3319 | 82.3 | 95.6 |
| 24 | EPD (100 nm) | | | 3323 | 81.5 | 96.0 |
| 25 | EPD (200 nm) | | | 3328 | 78.6 | 96.1 |
| 26 | EPD (500 nm) | | | 3315 | 75.7 | 95.1 |
| 27 | EPD (600 nm) | | | 3301 | 65 | 96.0 |
| 28 | EPD (1000 nm) | | | 3285 | 61 | 94.9 |
| 29 | EPD (2000 nm) | | | 3210 | 55 | 94.1 |
| | | | | | | |
| | | | | | | |

Table 9 shows results of evaluating the initial discharge capacity, high-rate properties, and lifespan properties according to the thickness of the structure-stabilized graphene layer (Bottom), and when the thickness of the graphene bottom layer was 5 nm, the formation of a graphene network was insufficient, resulting in a capacity retention rate of 81.4% at the100-th cycle of charge and discharge, which cannot be evaluated as absolutely bad, but a decrease in capacity retention rate was exhibited to be larger than that of the other Examples.

On the other hand, when the thickness of the structure-stabilized graphene layer (Bottom) was excessively thick at 600 nm or greater, an electrical path between the current collector and the active material was limited, so that a phenomenon was observed in which high-rate properties were degraded.

Considering the above circumstances, the thickness of the structure-stabilized graphene layer (Bottom) may be 10 nm to 500 nm, preferably 10 nm to 100 nm.

Table 10 below shows results of evaluating properties of a half-cell for each condition of the structure-stabilized graphene layer (Cover).

[Table 10]

| Example Number | Graphene layer (Bottom) | Negative electrode material layer | Graphene layer (cover) | Initial discharge capacity (mAh/g) | Rate properties (2C) (%) | Capacity retention rate (100 cycles) (%) |
|---|---|---|---|---|---|---|
| 30 | EPD (150 nm) | Si/G-carbon black-GHPB binder | EPD (40 nm) | 3307 | 80.5 | 78.4 |
| 31 | | | EPD (50 nm) | 3317 | 82.2 | 95.7 |
| 32 | | | EPD (100 nm) | 3315 | 82.8 | 95.0 |
| 33 | | | EPD (200 nm) | 3321 | 81.9 | 95.2 |
| 34 | | | EPD (300 nm) | 3318 | 82.0 | 95.5 |
| 35 | | | EPD (500 nm) | 3322 | 81.8 | 95.9 |
| 36 | | | EPD (800 nm) | 3325 | 78.6 | 96.0 |
| 37 | | | EPD (1000 nm) | 3298 | 75.7 | 95.5 |
| 38 | | | EPD (2000 nm) | 3295 | 79 | 92.1 |
| 39 | | | EPD (3000 nm) | 3210 | 78 | 91.1 |
| 40 | | | EPD (4000 nm) | 2908 | 43 | 77.5 |
| | | | | | | |
| | | | | | | |

Table 10 shows results of evaluating the initial discharge capacity, high-rate properties, and lifespan properties according to the thickness of the structure-stabilized graphene layer (Cover), and when the thickness of the structure-stabilized graphene layer (Cover) was 40 nm, graphene was unable to sufficiently control the contraction and expansion of the silicon negative electrode material, resulting in a capacity retention of 78.4% at the 100-th cycle of charge and discharge. This cannot be evaluated as absolutely bad, but a decrease in capacity retention rate was confirmed to be larger than that of the other Examples.

On the other hand, when the thickness of the structure-stabilized graphene layer (Cover) was excessively thick at 4000 nm or greater, a movement path of Li cations between the electrolyte and the active material was limited, so that degradation in initial discharge capacity, degradation in high-rate properties, and reduction in lifespan properties were observed.

Considering the above circumstances, the thickness of the structure-stabilized graphene layer (Cover) may be 50 nm to 3000 nm, preferably 50 nm to 500 nm.

Table 11 below shows results of evaluating full-cell properties of a graphene network battery.

[Table 11]

| Number | Graphene layer (Bottom) | Negative electrode material layer | Graphene layer (cover) | Capacity retention rate (50 cycles) (%) | Capacity retention rate (100 cycles) (%) | Capacity retention rate (500 cycles) (%) |
|---|---|---|---|---|---|---|
| Comparative Example 7 | None | Silicon metal-carbon black-SBR, CMC binder | None | 5.3 | Stopped | Stopped |
| Comparative Example 8 | None | Silicon metal-carbon black-PAA binder | None | 9.5 | Stopped | Stopped |
| Example 41 | None | Silicon metal-carbon black-PAA binder | EPD (150 nm) | 75.4 | 68.9 | Stopped |

(continued)

| Number | Graphene layer (Bottom) | Negative electrode material layer | Graphene layer (cover) | Capacity retention rate (50 cycles) (%) | Capacity retention rate (100 cycles) (%) | Capacity retention rate (500 cycles) (%) |
|---|---|---|---|---|---|---|
| Example 42 | Casting (20nm) | Si/G-Carbon Black-G HPB Binder | EPD (150 nm) | 97.9 | 97.2 | 92.8 |
| Example 43 | EPD (50 nm) | Si/G-carbon black-GHPB binder | EPD (150 nm) | 98.2 | 97.6 | 93.1 |

Comparative Examples 7 and 8 exhibited rapid performance degradation due to expansion and contraction of the silicon negative electrode material in the process of full-cell evaluation.

Example 41 exhibited relatively excellent lifespan properties compared to Comparative Examples, but exhibited a continuous decrease in capacity as charge and discharge continued. This suggests that the silicon negative electrode material was gradually delaminated from the current collector in the process of long-lifespan evaluation, and a decrease in capacity retention rate was exhibited to be larger than that of the other Examples.

Meanwhile, Examples 42 and 43 in which the structure-stabilized graphene layers (Bottom, Cover) were applied also exhibited a very excellent capacity retention rate up to the 500-th cycle of charge and discharge in the process of full-cell evaluation. This indicates that the structure-stabilized graphene layers (Bottom, Cover) effectively control the contraction-expansion of the silicon negative electrode material during charge and discharge.

Considering the above circumstances, it can be seen that a three-dimensional graphene network negative electrode structure in which a structure-stabilized graphene layer is introduced into a negative electrode material, exhibits remarkable performance in terms of improving stability and lifespan during charge and discharge cycles.

The scope of protection of the present invention is not limited to the descriptions and expressions of the embodiments explicitly described above. In addition, it should be added once again that the scope of protection of the present invention may not be limited due to obvious changes or substitutions in the technical field to which the present invention pertains.

This patent document was prepared and filed with the support of the following national research and development projects of the Republic of Korea.

Project ID: 20014475
Ministry: Ministry of Trade, Industry and Energy Research
Management Agency: Korea Planning and Evaluation Institute of Industrial Technology
Research Project Name: Technology Development of Nano-Fusion Innovative Product
Research Task Name: Development of Anti-Fog Headlight Technology with Moisture Generation Area of 10% or less in Nano Composite Material-based Head Lamp
Contribution Rate: 1/4
Lead Organization: Best Graphene Co., Ltd.
Research Period: April 1, 2021 - December 31, 2025 (Total 4 years and 9 months)

Project ID: RS-2023-00303772
Ministry: Ministry of SMEs and Startups
Research Management Agency: Technology and Information Promotion Agency for SMEs
Research Project Name: Technology Innovation Development for SMEs (R&D)
Research Task Name: Development of Functionalized Graphene Hybrid Silicon Technology for Commercialization of High-Capacity Silicon Composite Negative Electrode Material
Contribution Rate: 1/4
Lead Organization: Best Graphene Co., Ltd.
Research Period: October 20, 2023 - October 19, 2026 (Total 36 months)

Project ID: RS-2024-00419914
Ministry: Ministry of Trade, Industry and Energy
Research Management Agency: Korea Planning and Evaluation Institute of Industrial Technology
Research Project Name: Technology Development of Electronic Components
Research Task Name: Development of High-Capacity MLCC Product Technology for Electric Vehicles Based on Graphene-BaTiO3 Composite Dielectrics
Contribution Rate: 1/4
Lead Organization: Best Graphene Co., Ltd.
Research Period: April 1, 2024 - December 31, 2027 (Total 3 years and 9 months)

Project ID: RS-2024-00431451
Ministry: Ministry of Trade, Industry and Energy
Research Management Agency: Korea Planning and Evaluation Institute of Industrial Technology
Research Project Name: Materials and Parts Technology Development Project
Research Task Name: Development of High-durability, High-stability Conductive Microfiber Composite Material Technology
Contribution Rate: 1/4
Lead Organization: Best Graphene Co., Ltd.
Research Period: July 1, 2024 - December 31, 2027 (Total 3 years and 6 months)

## Claims

**1.** A graphene network battery comprising:
a positive electrode current collector, a positive electrode mixture, a separator, a negative electrode mixture, and a negative electrode current collector, wherein the negative electrode mixture includes: a negative electrode material layer formed on an upper portion of the negative electrode current collector, and including a silicon negative electrode active material and a binder; and a structure-stabilized graphene layer formed on at least one surface of the negative electrode material layer.

**2.** The graphene network battery of claim 1, wherein the structure-stabilized graphene layer is formed on the uppermost portion of the negative electrode material layer.

**3.** The graphene network battery of claim 2, wherein the structure-stabilized graphene layer has a thickness of 50 nm to 3,000 nm.

**4.** The graphene network battery of claim 1, wherein the structure-stabilized graphene layer is interposed between the negative electrode material layer and the current collector.

**5.** The graphene network battery of claim 4, wherein the structure-stabilized graphene layer has a thickness of 10 nm to 500 nm.

**6.** The graphene network battery of claim 1, wherein the negative electrode material layer and the structure-stabilized graphene layer are alternately stacked.

**7.** The graphene network battery of claim 1, wherein the binder is at least one selected from the group consisting of styrene-butadiene rubber (SBR), carboxymethyl cellulose (CMC), polyacrylic acid (PAA), and a graphene hybrid binder.

**8.** The graphene network battery of claim 7, wherein when the binder is a graphene hybrid binder, the graphene hybrid binder comprises functionalized graphene having a functional group; and a polymer binder bonded to the functionalized graphene by a functional group.

**9.** The graphene network battery of claim 1, wherein the silicon negative electrode material is at least one selected from the group consisting of silicon, a silicon compound, and a graphene-silicon hybrid negative electrode active material.

**10.** The graphene network battery of claim 1, wherein when the silicon negative electrode material is a graphene-silicon hybrid negative electrode active material, the graphene-silicon hybrid negative electrode active material comprises a graphene coating layer formed by self-adsorption of functionalized graphene having a functional group onto the surface of silicon or a silicon compound.

FIG.1

20
24
23
22
21
24
10
POSITIVE CURRENT COLLECTOR
NEGATIVE CURRENT COLLECTOR
POSITIVE ELECTRODE ACTIVE MATERIAL LAYER
SEPARATOR
NEGATIVE ELECTRODE ACTIVE MATERIAL LAYER

FIG.2

NEAR-SPHERICAL ORGANIC/
INORGANIC PARTICLE
(DIAMETER 0.1~100um)
GRAPHENE
COATING LAYER
(THICKNESS 0.2~5nm)
SPONTANEOUS ADSORPTION COATING
LAYER OF FUNCTIONALIZED GRAPHENE
(Si, SiOx, SiO2)
POSITIVELY(+) CHARGED SURFACE
OF FUNCTIONALIZED GRAPHENE
FORMATION
OF STRONG
ELECTROSTATIC
BOND
NEGATIVELY(−) CHARGED
PARTICLE SURFACE
SURFACE FUNCTIONAL GROUPS
OF FUNCTIONALIZED GRAPHENE
Amine -NH2, Amide -NHCO-
FORMATION
OF BOND VIA
HYDROGEN
BONDING
OXYGEN-CONTAINING
PARTICLE SURFACE
POSSIBILITY OF COVALENT
BOND FORMATION VIA
DEHYDRATION REACTION
-H2O
-H2O
-H2O
FORMATION
OF BOND VIA
COVALENT
BONDING
OXYGEN-CONTAINING
PARTICLE SURFACE

FIG.3

1
NH
O
NH
O
NH
O

FIG.4

22
223
222
1
O
NH
OH
O
O
OH
O
OH
NH
221
O
NH
O
OH
O
O
OH
O
OH

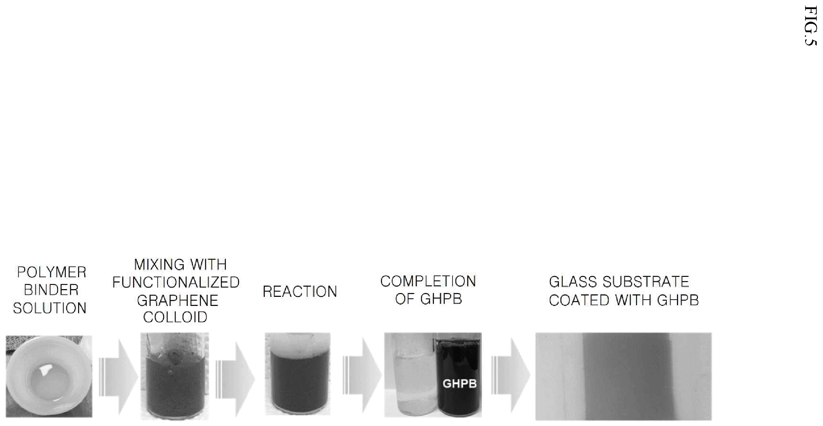

FIG.5

POLYMER BINDER SOLUTION
MIXING WITH FUNCTIONALIZED GRAPHENE COLLOID
REACTION
COMPLETION OF GHPB
GHPB
GLASS SUBSTRATE COATED WITH GHPB

FIG.6

POSITIVELY CHARGED FUNCTIONALIZED GRAPHENE
GHPB-1(G hybrid PAA)
GHPB-1(G hybrid PAA) completion
GHPB-2(G hybrid PAA) PUD completion
PUD(Poly Urethane Dispersion)
PAA(Poly Acrylic acid)
Transmittance [%]
4000
3600
3200
2800
2400
2000
1600
1200
800
Wavenumber [cm⁻¹]

FIG.7

G peak
D peak
GHPB-1(G hybrid PAA) completion
C=O peak
PAA(Poly Acrylic acid)
Intensity [a.u.]
400
800
1200
1600
2000
2400
Raman shift [cm⁻¹]

FIG.8

24
21
22
23
24
21
22
23
24

FIG.9

PREPARATION OF FUNCTIONALIZED GRAPHENE COLLOID
MULTI-LAYER STRUCTURE
FORMATION OF STRUCTURE-STABILIZED GRAPHENE LAYER ON CURRENT COLLECTOR
FORMATION OF SILICON ANODE MATERIAL LAYER ON STRUCTURE-STABILIZED GRAPHENE LAYER
FORMATION OF STRUCTURE-STABILIZED GRAPHENE LAYER ON SILICON ANODE MATERIAL LAYER
PERFORMING PRESSING AND DRYING
ASSEMBLY OF CATHODE, SEPARATOR, AND ANODE CELL
CELL SEALING AFTER ELECTROLYTE INJECTION

FIG.10

(−)
(+)
(+)
(+)
(+)
(+)
Cu CURRENT COLLECTOR LAYER
COUNTER ELECTRODE
(−)
(+)
(+)
(+)
(+)
(+)
Cu CURRENT COLLECTOR LAYER
STRUCTURE -STABILIZED GRAPHENE LAYER
COUNTER ELECTRODE

FIG.11

CURRENT COLLECTOR LAYER
GRAPHENE LAYER (BOTTOM)
Si/G ANODE MATERIAL LAYER
GRAPHENE LAYER (COVER)

**TRANSLATION**

## INTERNATIONAL SEARCH REPORT

International application No.
**PCT/KR2024/019226**

**A. CLASSIFICATION OF SUBJECT MATTER**

**H01M 10/42**(2006.01)i; **H01M 4/38**(2006.01)i; **H01M 4/62**(2006.01)i; **H01M 4/36**(2006.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 10/42(2006.01); H01M 10/0525(2010.01); H01M 4/13(2010.01); H01M 4/131(2010.01); H01M 4/1393(2010.01); H01M 50/20(2021.01); H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 그래핀 네트워크 배터리(graphene network battery), 음극 집전체(negative electrode current collector), 음극 활물질층(negative electrode active material layer), 구조 안정화 그래핀층(structural stabilization graphene layer), 바인더(binder)

**C. DOCUMENTS CONSIDERED TO BE RELEVANT**

| Category* | Citation of document, with indication, where appropriate, of the relevant passages | Relevant to claim No. |
|---|---|---|
| X<br>Y | KR 10-2017-0092122 A (LG CHEM, LTD.) 10 August 2017 (2017-08-10)<br>see paragraphs [0014]-[0019], [0038]-[0053], [0075]. | 1,4-5,7-10<br>2-3,6 |
| Y | KR 10-2019-0088064 A (SEMICONDUCTOR ENERGY LABORATORY CO., LTD.) 25 July 2019 (2019-07-25)<br>see paragraphs [0016], [0032], [0145]; and figure 2. | 2-3,6 |
| A | KR 10-2017-0032194 A (INDUSTRY-UNIVERSITY COOPERATION FOUNDATION HANYANG UNIVERSITY) 22 March 2017 (2017-03-22)<br>see entire document. | 1-10 |
| A | KR 10-2013-0064019 A (SEMICONDUCTOR ENERGY LABORATORY CO., LTD.) 17 June 2013 (2013-06-17)<br>see entire document. | 1-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 August 2025** | **19 August 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

TRANSLATION

INTERNATIONAL SEARCH REPORT

International application No.
PCT/KR2024/019226

C. DOCUMENTS CONSIDERED TO BE RELEVANT

| Category* | Citation of document, with indication, where appropriate, of the relevant passages | Relevant to claim No. |
|---|---|---|
| A | KR 10-2019-0074999 A (LG CHEM, LTD.) 28 June 2019 (2019-06-28) see entire document. | 1-10 |

Form PCT/ISA/210 (second sheet) (July 2022)

TRANSLATION

**INTERNATIONAL SEARCH REPORT**
**Information on patent family members**

International application No.
**PCT/KR2024/019226**

| Patent document cited in search report | Publication date (day/month/year) | Patent family member(s) | Publication date (day/month/year) |
|---|---|---|---|
| KR 10-2017-0092122 A | 10 August 2017 | KR 10-2359828 B1 | 09 February 2022 |
| KR 10-2019-0088064 A | 25 July 2019 | CN 110114910 A | 09 August 2019 |
| | | CN 110114910 B | 18 June 2024 |
| | | JP 2018-098200 A | 21 June 2018 |
| | | JP 2020-038838 A | 12 March 2020 |
| | | JP 2023-015339 A | 31 January 2023 |
| | | JP 2025-000841 A | 07 January 2025 |
| | | JP 6618980 B2 | 11 December 2019 |
| | | KR 10-2023-0058551 A | 03 May 2023 |
| | | KR 10-2023-0129592 A | 08 September 2023 |
| | | KR 10-2528223 B1 | 02 May 2023 |
| | | KR 10-2572999 B1 | 30 August 2023 |
| | | KR 10-2733405 B1 | 21 November 2024 |
| | | US 2021-0104744 A1 | 08 April 2021 |
| | | WO 2018-104838 A1 | 14 June 2018 |
| KR 10-2017-0032194 A | 22 March 2017 | KR 10-1879502 B1 | 18 July 2018 |
| KR 10-2013-0064019 A | 17 June 2013 | CN 103151492 A | 12 June 2013 |
| | | CN 103151492 B | 17 May 2017 |
| | | JP 2013-235811 A | 21 November 2013 |
| | | JP 6059941 B2 | 11 January 2017 |
| | | KR 10-2056328 B1 | 16 December 2019 |
| | | US 10026966 B2 | 17 July 2018 |
| | | US 2013-0149605 A1 | 13 June 2013 |
| KR 10-2019-0074999 A | 28 June 2019 | KR 10-2278634 B1 | 16 July 2021 |
| | | US 11848437 B2 | 19 December 2023 |
| | | US 2020-0220156 A1 | 09 July 2020 |
| | | WO 2019-125024 A1 | 27 June 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020230099837